# EUROPÄISCHE PATENTSCHRIFT

(11) **EP 0 846 354 B1**
(45) Veröffentlichungstag und Bekanntmachung des Hinweises auf die Patenterteilung: **12.05.1999**
(21) Anmeldenummer: 96930082.1
(22) Anmeldetag: 23.08.1996
(51) Int. Cl.: H02B 1/56

(54) **SCHALTSCHRANK MIT WÄRMETAUSCHER**
SWITCHGEAR CABINET WITH HEAT EXCHANGER
ARMOIRE DE DISTRIBUTION A ECHANGEUR DE CHALEUR

(30) Priorität: 25.08.1995 DE 19531310
(43) Veröffentlichungstag der Anmeldung: 10.06.1998
(73) Patentinhaber: Rittal-Werk Rudolf Loh GmbH & Co. KG, 35745 Herborn (DE)
(72) Erfinder: NICOLAI, Walter, D-35418 Buseck (DE)
(74) Vertreter: Fleck, Hermann-Josef, Dr.-Ing.
(86) Internationale Anmeldenummer: EP9603716
(87) Internationale Veröffentlichungsnummer: WO9708795

(56) Entgegenhaltungen:
- EP-A- 0 121 163
- WO-A-91/06995
- CH-A- 669 991
- DE-A- 2 556 329
- DE-A- 2 744 664
- DE-A- 3 423 992
- DE-A- 3 504 207
- DE-A- 4 218 007
- DE-C- 4 134 429
- FR-A- 2 335 935
- US-A- 5 035 281
- SIEMENS POWER ENGINEERING & AUTOMATION, Bd. 6, Nr. 1, März 1986, BERLIN, XP002021318 HANS-JÜRGEN HEINRICH: "Heat Dissipation from Equipment Cubicles"
- PATENT ABSTRACTS OF JAPAN vol. 13, no. 444 (E-828), 5.Oktober 1989 & JP,A,01 170096 (NEC CORP)

## Beschreibung

Die Erfindung betrifft einen Schaltschrank mit einem in ein Wandelement, z. B. Seitenwand (10), eingebauten Wärmetauscher mit einem Innenkreislauf und einem Außenkreislauf.

Ein solcher Schaltschrank ist aus der DE 27 44 664 bekannt. Dieses Dokument zeigt ein Klimagerät für einen Schaltschrank mit einem Wärmetauscher. Der Wärmetauscher hat einen Lamellenblock mit vertikalen Kühlrippen. Der Lamellenblock ist von einer vertikalen Trennwand durchsetzt, der die Kühlrippen in Außen-Kühlrippen und Innen-Kühlrippen teilt. Die Trennwand besitzt eine mittige Durchdringung, in die ein Elektromotor abgedichtet eingesetzt ist. Der Elektromotor hat zwei Abtriebswellen, wobei jeweils eine in den Bereich der Außen-Kühlrippen bzw. der Innen-Kühlrippen ragt. Die Abtriebswellen tragen Ventilatoren. Über diesen kann Luft angesaugt und durch die zwischen den einzelnen Kühlrippen gebildeten Kanäle geleitet und klimatisiert werden. Der Wärmetauscher ist mit seiner Trennwand an einer Seitenwand des Schaltschrankes befestigt. Damit ragen die Innen-Kühlrippen in den Innenraum des Schaltschrankes. Die Außen-Kühlrippen stehen über die Seitenwand in die Umgebung vor.

Bei einer solchen Anordnung ist ein hoher Aufwand erforderlich, wenn hohe Schutzarten wie IP 55 (staubdicht) oder gar IP 66 (spritzwassergeschützt) verwirklicht werden sollen. Insbesondere die abgedichtete Montage des Motores muß sehr sorgfältig durchgeführt werden. Weiterhin erweist sich als nachteilig, daß insbesondere stark wärmeentwickelnde elektronische Bauteile mit einem solchen Klimagerät nicht ausreichend gekühlt werden können.

Die WO91/06995 zeigt einen Schaltschrank, der allseitig mit Seitenwänden verschlossen ist. In eine der Seitenwände ist ein einstückiger Wärmetauscher eingesetzt, der Innen- und Außen-Kühlrippen aufweist. Die Innen-Kühlrippen sind von den Außen-Kühlrippen durch eine Trennwand getrennt. Der Wärmetauscher ist mit der Trennwand so in die Seitenwand eingesetzt, daß die Innen-Kühlrippen in den Innenraum des Schaltschrankes ragen. Die Außen-Kühlrippen stehen über die Seitenwand nach außen vor. Mit diesem Wärmetauscher kann Luft, die sich im Innenraum des Schaltschrankes erwärmt, über Konventionsvorgänge abgekühlt werden. Ein solcher Wärmetauscher eignet sich nur für Schaltschränke, in deren Innenraum geringe Wärmemengen entwickelt werden.

In der DE 25 56 329 ist ein Kühlgerät beschrieben, bei dem die einzelnen Komponenten in diesem geschlossenen Kühlgeräte-Gehäuse untergebracht sind. Das Kühlgeräte-Gehäuse kann außen an eine Seitenwand eines Schaltschrankes angebunden werden. Bei der Fixierung des Kühlgeräte-Gehäuses sind immer dann besondere Vorkehrungen zu treffen, wenn hohe Schutzarten verwirklicht werden sollen. Diese verteuern den Schaltschrank aber erheblich. Desweiteren besteht auch hier die Problematik, daß stark wärmeentwickelnde elektronische Einbauten dann nicht ausreichend gekühlt werden, wenn sie an einem entlegenen Ort im Innenraum des Schaltschrankes befestigt sind. Dieser Besonderheit muß bei der Bestückung des Schaltschrankes Rechnung getragen werden.

Kühlgeräte, die auf einem ähnlichen Funktionsprinzip basieren, wie es aus der DE 25 56 329 bekannt ist, zeigen bereits auch schon die CH 669 991 und die DE 41 34 429 C1.

Es ist Aufgabe der Erfindung, einen Schaltschrank bereitzustellen, bei dem ein Wärmetauscher auf einfache Art höheren Schutzanforderungen genügt und wobei eine effektive Kühlung des Innenraumes des Schaltschrankes möglich ist.

Diese Aufgabe der Erfindung wird mit den Merkmalen des Patentanspruches 1 gelöst. Demgemäß ist also vorgesehen, daß die Innenabdeckung, die die Innen-Kühlrippen überdeckt, so verlängert ist, daß sie die Innen-Kühlrippen oberseitig überragt. In diesem überragenden Teil trägt sie den Innen-Ventilator. Der Innen-Ventilator muß mit dieser einfachen Maßnahme nicht mehr gegenüber der den Schaltschrank umgebenden Atmosphäre abgedichtet werden. Hierdurch verringert sich der Fertigungsaufwand für den Wärmetauscher erheblich.

Dadurch, daß die Innen-Abdeckung im unteren Bereich der Innen-Kühlrippen mittels einer Auslaßplatte verschlossen ist, in der Luftaustrittsdüsen angeordnet sind oder elastische Luftkanäle abgehen, kann die klimatisierte Luft zielgerichtet solchen Einheiten zugeführt werden, die eine starke Wärmeentwicklung aufweisen. Damit ist die Effektivität des Klimagerätes erheblich zu steigern.

Bei bekannten, mit Wärmetauschern versehenen Schaltschränken steht der Schrank-Innenraum immer mehr oder weniger mit der den Schaltschrank umgebenden Außenluft in luftleitender Verbindung. Dies erschwert die Auslegung des Schaltschrankes mit eingebautem Wärmetauscher in höheren Schutzarten, wie IP55 (staubdicht) oder gar IP66 (spritzwassergeschützt). Dies erfordert stets besondere Vorkehrungen, die den Schaltschrank erheblich verteuern.

Es ist Aufgabe der Erfindung, einen Schaltschrank der eingangs erwähnten Art mit einem Wärmetauscher zu versehen, der auf einfache Art auch höheren Schutzanforderungen genügt.

Die Anpassung an unterschiedliche Gegebenheiten im Schrankinnenraum läßt sich auf einfache Weise dadurch erreichen, daß unterschiedliche, auswechselbare Auslaßplatten vorgesehen sind.

Die Wärmeabführ im Außenkreislauf läßt sich dadurch verbessern, daß die Außen-Kühlrippen des Kühlkörpers mittels einer Außen-Abdeckung abgedeckt ist, in die im unteren Bereich der Außen-Kühlrippen ein zusätzlicher Außen-Ventilator angebaut ist, der Außenluft ansaugt und den zwischen den Außen-Kühlrippen gebildeten Außen-Kanälen zuleitet. Ist dabei vorgesehen, daß die Außenabdeckung und der Außen-Ventilator eine Nachrüsteinheit bilden, dann kann bei niedriger Leistung des Wärmetauschers nur mit dem Innen-Ventilator gearbeitet werden und bei Bedarf über die Nachrüsteinheit die Leistung auf einfache Weise erhöht werden.

Eine weitere Möglichkeit zur Erhöhung der Leistung besteht darin, daß in den Kühlkörper zusätzliche Peltier-Elemente eingebaut sind.

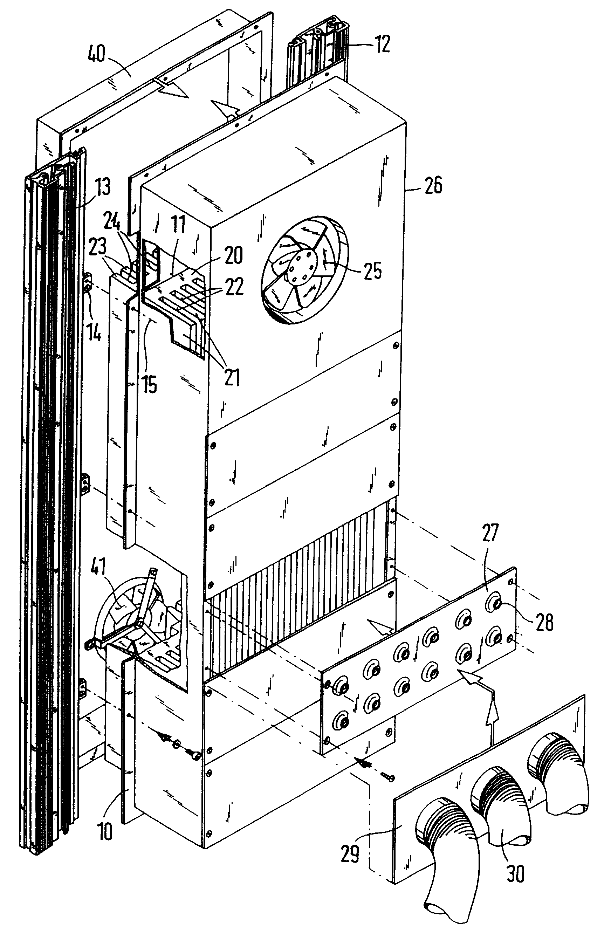

Die Erfindung wird anhand eines in der Zeichnung in perspektivischer Ansicht dargestellten Ausführungsbeispieles näher erläutert.

Von dem Schaltschrank sind nur die beiden vertikalen Rahmenschenkel 12 und 13 gezeigt, die eine offene Seite des Schaltschrankes begrenzen. An den Rahmenschenkeln 12 und 13 sind Befestigungselemente 14 angebracht, die zur Anbringung der Seitenwand 10 z.B. über Schraubverbindungen 15 verwendet werden. Die Anbringung der Seitenwand 10 an den Rahmenschenkeln 12 und 13 kann auf andere Art leicht so gelöst sein, daß mittels Dichtungselemente eine staubdichte und/oder spritzwasserdichte Anlage erreicht ist.

Die Seitenwand 10 weist einen Durchbruch 11 auf, der rechteckförmig und an die Größe eines Kühlkörpers 20 angepaßt ist. Dieser Kühlkörper 20 kann ebenfalls staubdicht und/oder spritzwassergeschützt in den Durchbruch 11 der Seitenwand 10 eingebaut sein. Der Kühlkörper 20 ragt mit vertikal ausgerichteten Kühlrippen 21 in den Schrankinnenraum, zwischen denen Innen-Kanäle 22 gebildet sind. Außerdem weist der Kühlkörper 20 Außen-Kühlrippen 23 auf, die Außen-Kanäle 24 begrenzen und auf der Außenseite der Seitenwand 10, d.h. in der den Schaltschrank umgebenden Außenluft liegen.

Über den Innen-Kühlrippen 21 ist ein Innen-Ventilator 25 angeordnet, der die Luft aus dem Schrankinnenraum ansaugt und den Innen-Kanälen 22 des Kühlkörpers 20 zuführt. Die angesaugte Luft gibt die Wärme beim Passieren der Innen-Kanäle 22 an die Innen-Kühlrippen 21 des Kühlkörpers 20 ab, in dem die Wärme zu den Außen-Kühlrippen 23 geleitet wird. Die Außen-Kühlrippen 23 werden von der Außenluft gekühlt.

Ist nur eine geringe Leistung des Wärmetauschers erforderlich, dann können die Innen-Kühlrippen 21 und die Außen-Kühlrippen 23 des Kühlkörpers 20 freiliegen. Die Leistung kann auf einfache Weise dadurch erhöht werden, daß die Innen-Kühlrippen 21 mittels einer Innen-Abdeckung 26 abgedeckt werden, in die auch der Innen-Ventilator 25 eingebaut ist. Diese Innen-Abdeckung kann im unteren Bereich der Innen-Kühlrippen 21 mittels austauschbarer, unterschiedlich gestalteter Auslaßplatten 27 oder 29 verschlossen sein. Die Auslaßplatte 27 ist mit Düsen 28 als Düsenplatte ausgebildet, während die Auslaßplatte 29 elastische Luftkanäle 30 aufweist, mit denen die gekühlte Luft an definierte Stellen im Schrankinnenraum geleitet werden kann. Die Auslaßplatte kann auch kombiniert Düsen und elastische Luftkanäle aufweisen.

Reicht die Leistung des Wärmetauschers immer noch nicht aus, dann können auch die Außen-Kühlrippen 23 des Kühlkörpers 20 mit einer Außen-Abdeckung 40 abgedeckt werden. Diese Außen-Abdeckung 40 bildet mit einem Außen-Ventilator 41 eine Nachrüsteinheit, die mit der Seitenwand 10 und/oder den Rahmenschenkeln 12 und 13 verbindbar ist. Der Außen-Ventilator 41 ist im unteren Bereich der Außen-Kühlrippen 23 angeordnet und saugt Außenluft an, leitet diese in den Außen-Kanälen 24 hoch und bewirkt dadurch eine bessere Wärmeabfuhr von den Außen-Kühlrippen 23 des Kühlkörpers 20.

Schließlich können in den Kühlkörper 20 zur Erhöhung der Leistung des Wärmetauschers zusätzlich Peltier-Elemente eingebaut werden.

## Patentansprüche

1. Schaltschrank mit einem in ein Wandelement, z. B. Seitenwand (10), eingebauten Wärmetauscher mit einem Innenkreislauf und einem Außenkreislauf, wobei
in einem Durchbruch (11) der Seitenwand (10) ein Kühlkörper (20) eingebaut ist, der mit vertikal ausgerichteten Innen-Kühlrippen (21) in den Schrankinnenraum ragt und mit vertikal ausgerichteten Außen-Kühlrippen (23) auf der Schrankaußenseite liegt, wobei
ein Innen-Ventilator (25) Luft aus dem Schrankinnenraum ansaugt und im oberen Bereich den zwischen den Innen-Kühlrippen (21) gebildeten Innen-Kanälen (22) zuführt, in denen die angesaugte Luft in den unteren Bereich der Innen-Kanäle (22) und von da aus in den Schrankinnenraum geleitet wird, und wobei
die Innen-Kühlrippen (21) des Kühlkörpers (20) mittels einer Innen-Abdeckung (26) abgedeckt sind,
dadurch gekennzeichnet,
daß die Innen-Abdeckung (26) die Innen-Kühlrippen (21) an ihren Oberseiten überragt und in diesem Bereich den Innen-Ventilator (25) trägt, und
daß die Innen-Abdeckung (26) im unteren Bereich der Innen-Kühlrippen (21) des einstückigen Kühlkörpers (20) mittels einer Auslaßplatte (27 bzw. 29) verschlossen ist, in der Luftaustrittsdüsen (28) angeordnet sind oder elastische Luftkanäle (30) abgehen.

2. Schaltschrank nach Anspruch 1,
dadurch gekennzeichnet,
daß der Kühlkörper (20) staubdicht und/oder spritzwassergeschützt in den Durchbruch (11) der Seitenwand (10) eingebaut ist.

3. Schaltschrank nach Anspruch 1 oder 2,
dadurch gekennzeichnet,
daß unterschiedliche, auswechselbare Auslaßplatten (27,29) vorgesehen sind.

4. Schaltschrank nach einem der Ansprüche 1 bis 3,
dadurch gekennzeichnet,
daß die Außen-Kühlrippen (23) des Kühlkörpers (20) mittels einer Außen-Abdeckung (40) abgedeckt ist, in die im unteren Bereich der Außen-Kühlrippen (23) ein zusätzlicher Außen-Ventilator (41) eingebaut ist, der Außenluft ansaugt und den zwischen den Außen-Kühlrippen (23) gebildeten Außen-Kanälen (24) zuleitet.

5. Schaltschrank nach einem der Ansprüche 1 bis 4,
dadurch gekennzeichnet,
daß in den Kühlkörper (20) zusätzliche Peltier-Elemente eingebaut sind.

6. Schaltschrank nach Anspruch 4,
dadurch gekennzeichnet,
daß die Außen-Abdeckung (40) und der Außen-Ventilator (41) eine Nachrüsteinheit bilden.

## Claims

1. Switchgear cabinet, having a heat exchanger provided with an internal circuit and an external circuit and installed in a wall element, e.g. lateral wall (10), a heat sink (20) being installed in an opening (11) of the lateral wall (10), said heat sink protruding into the cabinet interior with vertically orientated internal cooling ribs (21) and lying on the external side of the cabinet with vertically orientated external cooling ribs (23), an internal fan (25) sucking-in air from the cabinet interior and supplying it to the internal ducts (22) in the upper region, which ducts are formed between the internal cooling ribs (21), and in which ducts the sucked-in air is conducted into the lower region of the internal ducts (22) and from there out into the cabinet interior, and the internal cooling ribs (21) of the heat sink (20) being covered by means of an internal cover (26), characterised in that the internal cover (26) protrudes beyond the internal cooling ribs (21) at their upper sides and carries the internal fan (25) in this region, and in that the internal cover (26) in the lower region of the internal cooling ribs (21) of the one-piece heat sink (20) is closed by means of an outlet plate (27 or 29 respectively), in which air outlet nozzles (28) are disposed, or from which resilient air ducts (30) extend.

2. Switchgear cabinet according to claim 1, characterised in that the heat sink (20) is installed in the opening (11) of the lateral wall (10) in a dustproof and/or splashproof manner.

3. Switchgear cabinet according to claim 1 or 2, characterised in that various interchangeable outlet plates (27, 29) are provided.

4. Switchgear cabinet according to one of claims 1 to 3, characterised in that the external cooling ribs (23) of the heat sink (20) are covered by means of an external cover (40), in which an additional external fan (41) is installed in the lower region of the external cooling ribs (23), which fan sucks-in outside air and supplies it to the external ducts (24) formed between the external cooling ribs (23).

5. Switchgear cabinet according to one of claims 1 to 4, characterised in that additional Peltier elements are installed in the heat sink (20).

6. Switchgear cabinet according to claim 4, characterised in that the external cover (40) and the external fan (41) form a supplementary unit.

## Revendications

1. Armoire de distribution à échangeur de chaleur, ce dernier étant monté dans un élément de paroi, par exemple dans une paroi latérale (10) et comportant un circuit intérieur et un circuit extérieur, où
un organe de refroidissement (20) est monté dans un percement (11) de la paroi latérale (10), organe de refroidissement (20) qui s'engage par des ailettes de refroidissement intérieures (21) orientées verticalement dans l'enceinte intérieure de l'armoire et qui par des ailettes de refroidissement extérieures (23) est situé sur le côté extérieur de l'armoire, où
un ventilateur intérieur (25) aspire de l'air hors de l'enceinte intérieure de l'armoire et alimente cet air dans la région du haut au aux conduits intérieurs (22) formés entre les ailettes de refroidissement intérieures (21), conduits (22) dans lesquels l'air aspiré est dirigé vers la région inférieure des conduits intérieurs (22) et de la hors de l'enceinte intérieur de l'armoire, et où
les ailettes intérieures (21) de l'organe de refroidissement (20) sont recouvertes par un capot intérieur,
caractérisée
en ce que les côtés supérieurs du capot intérieur (26) sont plus hauts que les ailettes de refroidissement intérieures (22) et que dans l'espace libre ainsi obtenu portent le ventilateur intérieur (25), et
en ce que le capot intérieur (26) est, dans la région inférieure des ailettes de refroidissement intérieures (21) de l'organe de refroidissement (20) formant une seule pièce, fermé par une plaque d'échappement (27 ou 29), dans laquelle sont disposées les tubulures d'échappement d'air (28) ou dont sont issues des canalisations élastiques d'air (30).

2. Armoire de distribution suivant la revendication 1,
caractérisée
an ce que l'organe de refroidissement (20) est monté de manière hermétique à la poussière et/ou protégée contre les projections d'eau dans le percement (11) de la paroi latérale (10).

3. Armoire de distribution suivant la revendication 1 ou 2,
caractérisée
en ce que des plaques d'échappement différentes et interchangeables (27, 29) sont prévues.

4. Armoire de distribution suivant l'une quelconque des revendications de 1 à 3,
caractérisée
en ce que les ailettes de refroidissement extérieures (23) de l'organe de refroidissement (20) sont recouvertes d'un capot extérieur (40), dans lequel est monté, au-dessous des ailettes de refroidissement extérieures (23), un ventilateur extérieur supplémentaire (41), qui aspire de l'air extérieur et le dirige vers les conduits extérieurs (24) formés entre les ailettes de refroidissement extérieurs (23).

5. Armoire de distribution suivant l'une quelconque des revendications de 1 à 4,
caractérisée
en ce que dans l'organe de refroidissement (20) sont montés des éléments Peltier supplémentaires.

6. Armoire de distribution suivant la revendication 4,
caractérisée
en ce que le capot extérieur (40) et le ventilateur extérieur (41) constituent une unité complémentaire pouvant être ajoutée par après.
